# EUROPEAN PATENT APPLICATION

(11) **EP 0 801 220 A2**
(43) Date of publication of application: **15.10.1997**
(21) Application number: 97302404.5
(22) Date of filing: 08.04.1997
(51) Int. Cl.: F02K 1/76

(54) **Actuator for an aircraft thrust reversal system**

(30) Priority: 09.04.1996 GB 9607393
(71) Applicant: LUCAS INDUSTRIES public limited company, Solihull, B90 4LA (GB)
(72) Inventor: David, Stephen Harlow, Telford, Shropshire (GB); Harbvey, John Herbert, Perton, Wolverhampton (GB)
(74) Representative: Waite, Anthony William

(57) **Abstract**

An actuator for an aircraft thrust reversal system has a piston (25) reciprocable in a cylinder (12) between extended and retracted positions under the action of fluid pressure, sensing means including an actuating element (38) and switch means (34, 35), and return means (45) arranged to oppose movement of the element (38) in opposite directions from an intermediate position. The components are arranged so that, as the piston approaches its retracted or extended position, the actuating element (38) is moved from its intermediate position against the action of the return means to operate the switch means. An aircraft thrust reversal system is also described, incorporating a plurality of the aforementioned actuators.

## Description

This invention relates to an actuator intended primarily for incorporation in an aircraft thrust reversal system. The invention also embraces a thrust reversal system incorporating such an actuator.

An example of a thrust reversal system for a fan type aircraft gas turbine engine employs a cowl which is movable from a stowed position to a deployed position to uncover air flow outlets. The outlets are fitted with louvres so that the air flow is directed forwardly of the aircraft to provide reverse thrust in order to supplement the action of the wheel brakes. A known system has four fluid pressure operable jacks to move the cowl, the jacks being interconnected by a rotary shaft so that they move in synchronism. In addition, various locks are provided to guard against accidental deployment of the cowl. In the known system locks are incorporated in two of the jacks and are released when actuating fluid is applied to the jacks and a further lock is provided which locks the cowl to the engine casing. Moreover, sensors are provided to provide an indication of the operative states of the jacks.

The object of the present invention is to provide an improved actuator, primarily for use in an aircraft thrust reversal system, and an improved thrust reversal system incorporating the actuator.

According to the invention an actuator comprises a piston reciprocable in a cylinder between extended and retracted positions under the action of fluid pressure, sensing means including an actuating element and switch means, return means arranged to oppose movement of the element in opposite directions from an intermediate position, the arrangement being such that, as the piston approaches its retracted or extended position, the actuating element is moved away from its intermediate position against the action of the return means to operate the switch means.

According to another aspect of the invention an aircraft thrust reversal system comprises first and second actuators of the invention, each having an output member coupled to a thrust reversal surface such as to effect movement of the surface between a stowed position and a deployed position upon operation of the actuators, a synchronising shaft interconnecting the actuators and acting to maintain operating movement of the latter substantially in synchronism, first and second locks connected to the distal ends of the synchronising shaft to hold the surface in the stowed position, the sensing means of the actuators being responsive to the movement of the output members of the first and second actuators respectively, whereby in the event of failure of one lock, the other lock will retain the surface or surfaces in the stowed position and one of the sensing means will provide an indication of failure of the one lock.

In the accompanying drawings:-
Figure 1 shows one example of a fan type aircraft engine thrust reversal system;
Figures 2 and 3 show in part sectional side elevation an actuator or jack forming part of the system of Figure 1, and
Figure 4 shows a circuit diagram of a monitoring circuit for use with the system of Figure 1.

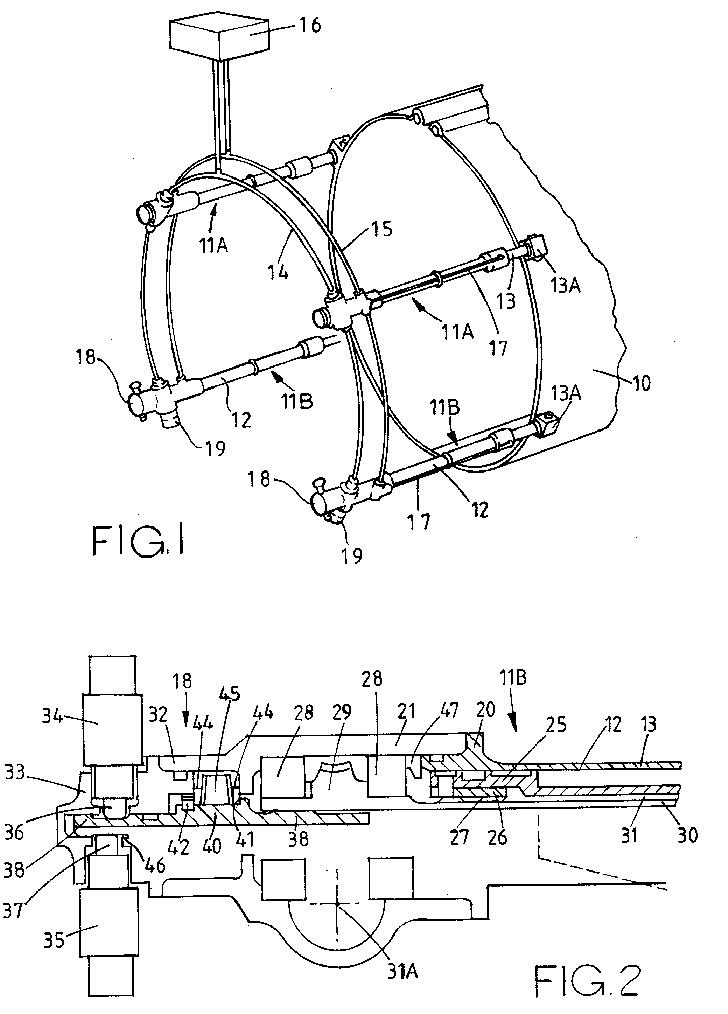

In Figure 1 of the drawings there is shown part of a cowl 10 of an aircraft gas turbine engine, the cowl being intended for deployment from a stowed position, when aircraft braking assistance is required, in order to uncover openings in the side of the engine casing so as to allow air pressurised by the fan engine to flow therethrough. The openings are provided with louvres which direct the air forwardly of the aircraft to produce reverse thrust. The movement of the cowl between the stowed and deployed positions is effected, in the example illustrated, by four jacks 11A, 11B of the fluid pressure operable piston/cylinder type, the cylinders 12 of which are mounted on the engine casing and the piston rods 13 of which mount couplings 13A which are attached to the cowl.

Each jack 11A, 11B is provided with two connections for hydraulic fluid and the corresponding connections of each jack are connected to fluid supply manifolds 14, 15 which themselves are connected to a control unit 16. The supply manifold 15 is connected by pipes 17 extending alongside the outer surfaces of the cylinders 12 to the ends of the cylinders remote from the manifold 14.

The lower jacks 11B carry locking units 19 whereby the opposite ends of a rotary flexible shaft located within the manifold 14 can be held against rotation. In addition the lower jacks incorporate piston position sensing units 18. The flexible shaft is coupled to the piston rods 13 of each jack so as to ensure that in operation, the piston rods extend or retract in synchronism.

The locking units 19 may be of the type described in EP-B-0536954 and, as described therein, may incorporate manually operable mechanisms whereby the cowl 10 can be moved for maintenance purposes in the situation where no fluid under pressure is available.

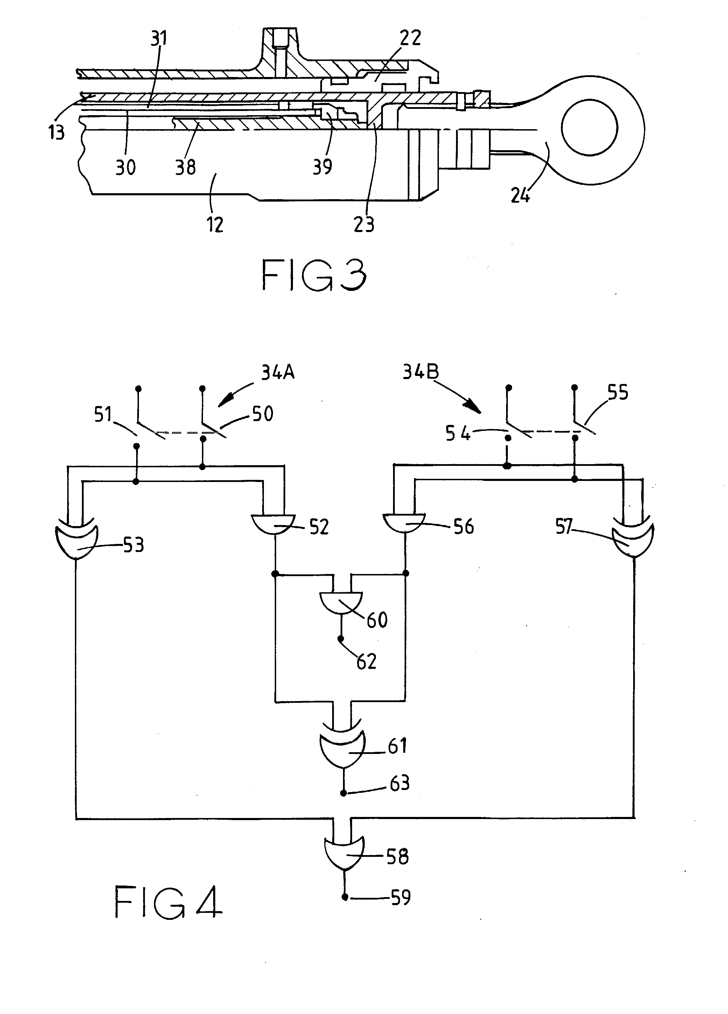

Figures 2 and 3 show the construction of the lower jacks 11B. The cylinder 12 is provided adjacent one end with a peripheral flange 20 which locates the cylinder within a casing 21. At its other end the cylinder is closed by an end cap 22 (Figure 3) through which extends the piston rod 13. As seen in Figure 3 the piston rod is of tubular form and has an internal wall or abutment 23. The end of the piston rod carries an eye 24 to form part of one of the couplings 13A whereby the piston rod is secured to the cowl 10.

The piston rod 13 carries an annular piston 25 of larger diameter than the piston rod and the internal surface of the piston is recessed to accommodate a sleeve 26 having a screw thread formation 27 on its internal surface.

Mounted within the casing by means of a pair of axially spaced bearing assemblies 28, is a hollow pinion wheel 29 formed integrally with a hollow shaft 30 which extends within the piston rod 13 towards the end cap 22. The pinion wheel 29 is provided with gear teeth which mesh with complementary teeth formed on a short shaft, of which the rotary axis is shown at 31A. One end of the shaft is coupled to the adjacent end of the aforementioned rotary flexible shaft. Moreover, the hollow shaft 30 is provided on its outer peripheral surface with a screw thread formation 31 which is complementary with the thread formation 27 and forms therewith a reversible threaded connection for the purpose to be described.

In operation, when the manifold 14 is connected to a source of fluid under pressure and the manifold 15 is connected to the same or a lower pressure, the piston 25 will move towards the right as seen in the drawings and the piston rod will extend from the cylinder to deploy the cowl 10. The extent of movement of the piston will be determined by its engagement with the end cap 22 or by an end stop associated with the cowl. Movement of the piston 25 in the case where the manifolds are connected to the same pressure is due to the fact that the effective end area of the piston exposed to the fluid pressure in the casing 21 is greater than the annular area of the piston within the cylinder 12. In order to retract the piston 25 and cowl, the manifold 14 is connected to a drain.

During movement of the piston 25 rotary motion is imparted to the hollow shaft 30 by the action of the reversible interengaged thread formations 27, 31 and this results in rotation of the rotary flexible shaft to ensure that the jack moves in synchronism with the others.

The jacks 11A are similar in construction to the jacks 11B so far described without the locks and sensing units.

The sensing unit 18 is housed within an extension 32 of the casing 21 and an end closure 33 and includes a pair of generally diametrically opposed electrical switches 34, 35 which are carried on the end closure 33 and which have opposing generally radially outwardly movable actuating elements 36, 37 respectively. The switches are mounted so that the axes of movement of the actuating elements are offset in the axial direction of the piston movement. The sensing unit further includes an actuating rod 38 which extends through the hollow shaft 30 for engagement with the abutment 23 defined by the piston rod. At its end remote from the switches, the rod 38 carries an abutment sleeve 39 of which the outer surface is guided by the internal surface of the piston rod 13.

A portion 40 of the actuating rod 38 which lies within the extension 32 of the casing is of enlarged diameter and defines a thrust shoulder 41. Spaced from this shoulder in the direction towards the switches, is an annular groove in which is located an annular thrust member 42. The axial spacing between the thrust shoulder 41 and the opposing face of the thrust member 42 corresponds to the axial spacing between a pair of thrust faces defined respectively on flange portions 21A, 33A of the casing 21 and the end closure 33. Located adjacent the thrust faces are respective thrust rings 44 with a prestressed spring pack 45 disposed between them.

In the position shown, the thrust rings 44 are in engagement with the aforesaid thrust faces and also with the thrust member 42 and thrust shoulder 41. The actuating rod 38 can therefore be said to be in an intermediate centralised position in which the actuating elements 36, 37 of the switches extend into a circumferential groove 46 formed in the actuating rod 38. It will be noted also that the remote end of the actuating rod is in engagement with the piston rod abutment 23. If it is assumed that the cowl is being moved to the stowed position, the piston 25 as shown, has not yet reached its fully retracted position because it is still spaced from an annular stop 47. During the continued movement of the piston towards the stop 47 the spring pack 45 is further stressed and the actuating element 36 of the switch 34 is urged out of the groove 46, by camming action with an inclined end of the groove, onto the surface of the rod 38, thereby operating the switch contacts. The switches 35 remain inoperative at this time with their plungers 37 still in the grooves 46. When the piston engages the stop 47, the locking units 19 are operated to retain the cowl in the stowed position, the spring pack being thereby maintained in its stressed condition urging the rod 38 and piston rod 13 towards the deployed position.

When it is required to deploy the cowl, the locking units 19 are unlocked and hydraulic fluid under pressure is supplied to the jack casings to cause movement of the pistons as described. This in turn causes the actuating rod 38 in each jack 11B to be moved by the spring pack 45 to the centralized position as shown in Figures 2 and 3 and the actuating elements 36 will move back into the groove 46. As the cowl reaches the deployed position the thread formation 27 moving with the piston engages the abutment collar 39 and the final part of the piston movement into the deploy position moves the actuating rod 38 in the opposite direction to that described above. The spring pack is again further stressed and the actuating element 37 of each switch 35 associated with the jacks 11B is operated to provide a cowl deployed signal. The switches 34 remain inoperative at this time with their plungers 36 still in the grooves 46.

If when the cowl is in the stowed position, one of the locks 19 should fail then providing the manifold 15 is not connected to the source of fluid under pressure the spring pack 45 in the sensor unit 18 associated with the failed lock through the associated actuating rod 38, will be able to move the associated piston rod a sufficient extent to allow the switch actuating element 36 to move into the groove 46 to provide an indication of failure. Such movement of the piston rod associated with the failed lock is able to take place due to the working clearances and flexibility of the various components including the clearance between the flexible shaft and the internal surface of the manifold 14.

Each switch 34 incorporates two pairs of contacts both of which are closed when the associated actuating element 36 is driven out of the respective grooves 46. Figure 4 shows a monitoring circuit for the two switches 34 on the jacks 11B and for convenience the two switches are referenced 34A, 34B. The pairs of contacts 50, 51 of the switch 34A provide connection when closed, from an electric current supply source to the input terminals respectively of a first AND gate 52 and to the input terminals of a first XOR gate 53. In like manner the pairs of contacts 54, 55 of the switch 34B are connected to a second AND gate 56 and a second XOR gate 57. The output terminals of the XOR gates are connected to the input terminals of an OR gate 58 having an output terminal 59. The output terminals of the AND gates 52, 56 are connected to the input terminals of the third AND gate 60 and also to the input terminals of a third XOR gate 61. The AND gate 60 has an output terminal 62 and the XOR gate 61 has an output terminal 63.

In operation, let it be assumed that the cowl 10 is in the stowed position and that both locks 19 are correctly locked. Let it also be assumed that each pair of contacts is closed. In this situation the first and second AND gates 52 and 56 will have logic HIGH outputs and as a result the output terminal 62 will be at logic HIGH. This is indicative of the correct operation of the system. The XOR gates 53 and 57 will have logic LOW outputs and therefore the output 59 will be at logic LOW.

If one of the locks should fail the pairs of contacts of the associated switch will open and if for example the switch 34A opens, the output of the AND gate 52 will be LOW and the output terminal 62 will be at logic LOW. The output 63 of the XOR gate 61 will be at logic HIGH. This is indicative of the fact that one lock has failed and that the other lock is still locked so that the cowl 10 is in the stowed position and is still locked. In the unlikely event that both locks fail both outputs 63 and 59 will be at a logic LOW, this also being the case when in normal operation the cowl is moved to the deployed position.

In the event of failure of one of the pairs of contacts 50, 51 say for example the pair of contacts 51, the output of the XOR gate 53 will be at logic HIGH as also will be the output 59 of the OR gate 58. In this situation the output 62 will be at logic LOW and the output 63 at logic HIGH.

## Claims

1. An actuator comprising a piston (25) reciprocable in a cylinder (21) between extended and retracted positions under the action of fluid pressure, sensing means including an actuating element (38) and switch means (34, 35), return means (45) arranged to oppose movement of the element (38) in opposite directions from an intermediate position, the arrangement being such that, as the piston approaches its retracted or extended position, the actuating element is moved away from its intermediate position against the action of the return means to operate the switch means.

2. An actuator according to Claim 1, wherein the sensing means includes a pair of switches (34, 35) which are operated respectively as the actuating element (38) moves in each of said opposed directions from its intermediate position.

3. An actuator according to Claim 2, wherein each switch (34, 35) is operated by a respective cam surface on the actuating element.

4. An actuator according to Claim 3, wherein the cam surfaces are oppositely facing.

5. An actuator according to any one of Claims 2 to 4, wherein the switches (34, 35) are arranged in generally diametrically opposed relationship and cam followers (36, 37) of the switches are disposed respectively at either side of the actuating element (38).

6. An actuator according to Claim 5, wherein the cam followers are plungers (36, 37).

7. An actuator according to Claim 5 or Claim 6, wherein the cam followers (36, 37) are disposed at mutually axially displaced positions along the actuating element (38).

8. An actuator according to any one of the preceding claims, wherein the return means is a spring device (45) which, with the actuating element (38) in its intermediate position reacts against axially spaced thrust surfaces (41, 42) movable with the actuating element and also against opposed fixed thrust surfaces (21A, 33A), the spring device being displaceable by the actuating element from one of the fixed surfaces and thereby stressed, by movement of the actuating element away from the intermediate position.

9. An aircraft thrust reversal system comprising first and second actuators (11B) according to any one of the preceding claims, each having an output member (13) coupled to a thrust reversal surface (10) such as to effect movement of the surface between a stowed position and a deployed position upon operation of the actuators, a synchronising shaft interconnecting the actuators and acting to maintain operating movement of the latter substantially in synchronism, first and second locks (19) connected to the distal ends of the synchronising shaft to hold the surface in the stowed position, the sensing means (18) of the actuators being responsive to the movement of the output members of the first and second actuators respectively, whereby in the event of failure of one lock (19), the other lock will retain the surface or surfaces in the stowed position and one of the sensing means will provide an indication of failure of the one lock.

10. A system according to Claim 9, wherein movement of the output members (13) towards the stowed position stresses the return means (45) of the sensing means (18) prior to locking operation of the locks (19), so that, upon failure of one of the locks, the return means will move the output member (13) of the associated actuator sufficiently to permit the actuating element (38) of the associated actuator to operate said one sensing means to provide a lock failure indication.

11. A system according to Claim 9 or Claim 10, wherein a monitoring circuit is provided to indicate correct and faulty operation of the system.
